# EUROPEAN PATENT SPECIFICATION

(11) **EP 2 885 698 B1**
(45) Date of publication and mention of the grant of the patent: **06.10.2021**
(21) Application number: 13829971.4
(22) Date of filing: 05.08.2013
(51) Int. Cl.: G06F 7/00, G06F 17/00, H04N 5/445, H04N 7/173, H04N 21/00

(54) **BROADBAND DELIVERY OF PERSONALIZATION INFORMATION FOR ADVANCED TV SERVICES**
BREITBANDIGE FREISETZUNG VON PERSONALISIERUNGSINFORMATIONEN FÜR ERWEITERTE TV-DIENSTE
LIVRAISON À LARGE BANDE D'INFORMATIONS DE PERSONNALISATION POUR DES SERVICES TV AVANCÉS

(30) Priority: 15.08.2012 US 201261683664 P
(43) Date of publication of application: 24.06.2015
(73) Proprietor: Saturn Licensing LLC, New York, NY 10022-3211 (US)
(72) Inventor: EYER, Mark, Park Ridge, NJ 07656 (US); YAMAGISHI, Yasuaki, Tokyo 108-0075 (JP)
(74) Representative: Witte, Weller & Partner Patentanwälte mbB
(86) International application number: PCT/US2013/053577
(87) International publication number: WO 2014/028255

(56) References cited:
- WO-A2-2011/122838
- US-A1- 2003 093 789
- US-A1- 2009 187 463
- US-A1- 2009 228 914
- US-A1- 2010 023 525
- US-A1- 2010 287 589
- US-A1- 2010 299 702
- US-A1- 2011 247 028
- US-A1- 2011 298 981
- US-A1- 2011 302 611
- US-A1- 2012 044 418
- US-A1- 2012 054 214
- US-A1- 2012 054 267
- US-A1- 2012 054 783
- US-A1- 2012 185 888
- US-A1- 2012 185 888
- US-A1- 2012 239 785
- US-A1- 2013 036 440
- None

## Description

### BACKGROUND OF THE INVENTION

### Field of the Invention

Embodiments described herein relate generally to a method, computer program, reception apparatus, and information providing apparatus for providing adjunct data. More particularly, the embodiments described herein relate generally to providing adjunct data related to Profiles, Demographics, and Interests (PDI).

### Background

Modern televisions and set top boxes are capable of performing numerous functions in addition to receiving and presenting television broadcasts. Some functions include the display of an electronic programming guide (EPG), widgets that allow a television viewer to pull up web pages and tools right alongside programs being watched on a television, and the like. Many of these functions require that the television or set top box receive adjunct data. For example, in the case of the EPG, the television or set top box would need to receive program information.

US 2012/185888 A1 discloses a computer-implemented method for a digital broadcast system that comprises an operation of receiving and processing an electronic questionnaire from at least one service provider of the digital broadcast system by a receiver. For instance, the electronic questionnaire has a first data structure that, when processed by the receiver, generates for display a plurality of questions. Thereafter, the method comprises an operation of acquiring answers to the electronic questionnaire in the receiver. The answers are used in filtering content subsequently downloaded to the receiver.

US 2012/054267 A1 discloses a transmission apparatus for distributing a content to a client, including a script generation section for generating a script for obtaining user side answer information representative of an answer of a user of the client to a question regarding liking of the user, and transmission section for transmitting the script and provider side answer information representative of an answer set by a provider which provides the content to the question regarding the liking of the user to the client.

US 2012/054214 A1 discloses a transmission apparatus for distributing a content to a client, including a script generation section configured to generate a script for obtaining user side answer information representative of an answer of a user of the client to a question regarding liking of the user, a trigger generation section configured to generate trigger information regarding execution of the script by the client, and a transmission section configured to transmit the trigger information and the script to the client in response to distribution of a first content to the client and transmitting, in response to distribution of a second content different from the first content to the client, provider side answer information representative of an answer set by a provider which provides the first or second content to the question regarding the liking of the user to the client.

US 2012/0544783 A1 discloses a transmission apparatus for distributing a content to a client, including: a question generation section configured to generate question information representative of a question regarding liking of a user of the client; and a transmission section configured to transmit the question information and provider side answer information in the form of a bit string representative of an answer set by a provider which provides the content to the question regarding the liking of the user to the client.

US 2011/247028 A1 discloses a computer-implemented method for a digital broadcast system. The method involves an operation of receiving an electronic questionnaire that includes a plurality of questions registered to avoid duplication of any one of the plurality of questions. The electronic questionnaire, when processed by a receiver of the digital broadcast system, generates for display a plurality of questions. The receiver acquires answers to the electronic questionnaire, where the answers are used in adjusting content subsequently downloaded to the receiver.

### SUMMARY OF THE INVENTION

According to an embodiment of the present disclosure, there is provided a method as defined in claim 1 with its dependent claims.

Further, according to an embodiment of the present disclosure, there is provided a computer-readable storage medium having instructions embedded therein, which, when executed by a computer, cause the computer to perform the method of Claim 1 with its dependent claims.

According to an embodiment of the present disclosure, there is provided a reception apparatus as defined in claim 8.

According to an embodiment of the present disclosure, there is provided an information providing system as defined in claim 14.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 illustrates an exemplary digital television service system;
FIG. 2 is a block diagram of an exemplary reception apparatus;
FIG. 3 is a processor-centric block diagram of an exemplary reception apparatus;
FIG. 4 illustrates a flow diagram of an exemplary method for retrieving PDI data;
FIG. 5A is an exemplary format of a URI string command delivered in non-closed caption text data;
FIG. 5B illustrates an exemplary PDI locator syntax;
FIG. 6 illustrates an example of PDI filter criteria delivery through metadata;
FIGS. 7A-7C illustrate exemplary PDI processing flow diagrams;
FIG. 8 illustrates an exemplary PDI questionnaire;
FIGS. 9A-9B illustrate exemplary PDI table schemas;
FIG. 10 illustrates an exemplary triggered declarative object (TDO) Parameters Table (TPT);
FIG. 11 illustrates an exemplary information providing apparatus; and
FIG. 12 is an exemplary computer.

### DETAILED DESCRIPTION

While the present disclosure is susceptible of embodiment in many different forms, there is shown in the drawings and will herein be described in detail specific embodiments, with the understanding that the disclosure of such embodiments is to be considered as an example of the principles and not intended to limit the present disclosure to the specific embodiments shown and described. In the description below, like reference numerals are used to describe the same, similar, or corresponding parts in the several views of the drawings.

Embodiments of the present disclosure are directed to providing adjunct data, such as PDI data, to a receiver. In certain embodiments, a PDI locator that identifies a location of the PDI data is provided to the receiver. The receiver retrieves the PDI data based on the PDI locator.

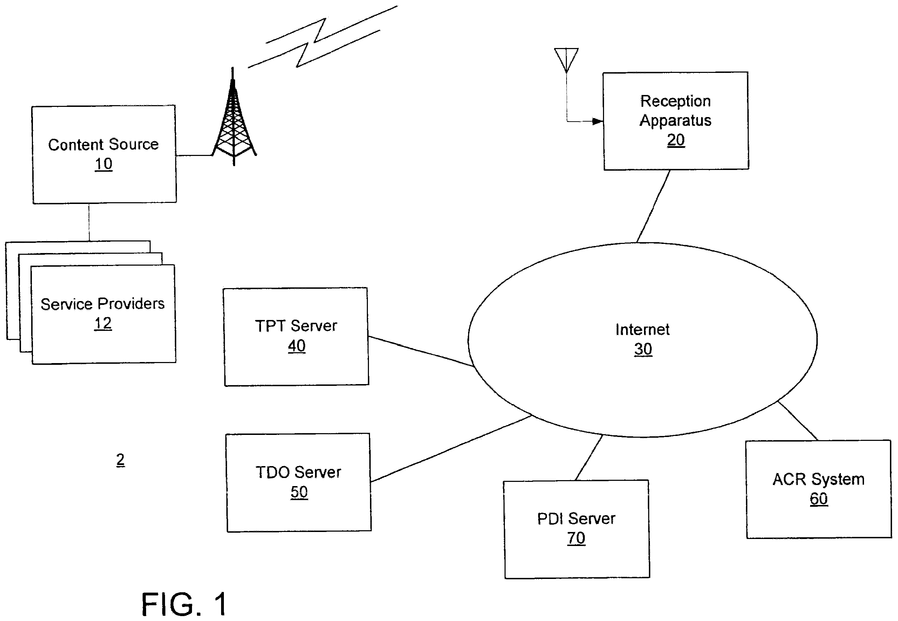

Figure 1 is a block diagram that shows an exemplary digital television service system 2, including a content source 10, a reception apparatus 20 *(e.g.,* a digital television receiver device), a triggered declarative object (TDO) parameters table (TPT) server 40, a TDO server 50, an automatic content recognition (ACR) system 60, and a Profiles, Demographics, and Interests (PDI) server 70. The TPT server 40, TDO server 50, ACR system 60, and PDI server 70 are configured to provide TPTs, TDOs, triggers, and PDI data, respectively, when such information is not included in a broadcast emission stream provided by the content source 10 or otherwise cannot be accessed by the reception apparatus 20.

It should be noted that other embodiments of the digital television service system 2 may include any one or a combination of the TPT server 40, TDO server 50, ACR system 60, and PDI server 70. Further, any combination of the TPT server 40, TDO server 50, ACR system 60, and PDI server 70 may be combined into one or more servers or systems.

The content source 10 receives content from service providers 12 and provides a broadcast emission stream, including one or more of the following: non-real-time (NRT) content, real-time (RT) or linear content, metadata associated with content, triggers, PDI data such as a PDI questionnaire (PDI-Q), TDOs, and TPTs. Service providers 12 may include content distributors such as television network operators.

The broadcast emission stream is provided to the reception apparatus 20 via a terrestrial broadcast. In other embodiments, the content source 10 provides the content via at least one of a satellite broadcast, a cable television transmission, a terrestrial television broadcast, cellular network, and data communication network such as a local area network (LAN), wide area network (WAN), or the Internet 30.

NRT content includes NRT services that are delivered faster or slower than real-time. In one embodiment, NRT content formats include audio/video but also can be audio-only or can be websites that can be displayed by a web browser. For example, descriptions of available NRT content can be described to the user. The user can select from a list of NRT content for later download. The user can also navigate and select from among previously downloaded content which to view.

Another NRT service features a "push" NRT service wherein the user is offered request-based content. The user may choose to have the reception apparatus 20 automatically update content associated with a service. For such chosen services, the reception apparatus 20 caches service-related content and automatically updates files as new versions are made available. When the user returns to a requested "push" service, content that has been preloaded is displayed.

Real-time or linear content provided by the content source 10 includes one or more television programs, without regard to whether the content is a movie, sporting event, segment of a multi-part series, news broadcast, etc. Further, the content provided by the content source 10 may also include advertisements, infomercials, and other program-like content which may not be reported as a program in an EPG.

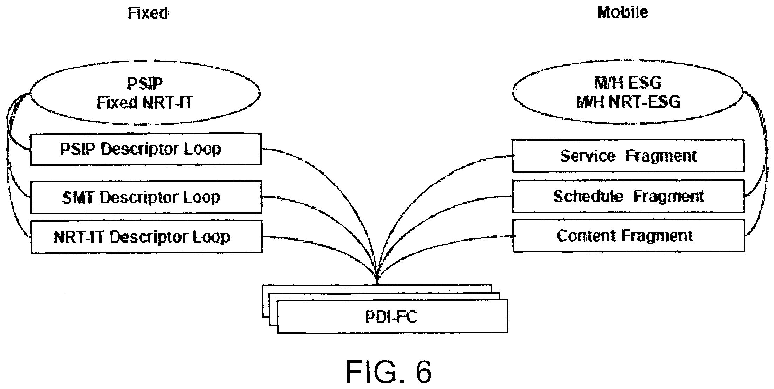

Metadata associated with content describes the available content and services. The metadata includes PDI filtering criteria (PDI-FC). In certain embodiments, the PDI-FC is carried to the reception apparatus 20 through an additional descriptor defined in a Program and System Information Protocol (PSIP) table or extended elements which describe content to be filtered, as illustrated for example in Figure 6.

Triggers are configured to perform various time-related signaling functions in support of interactive services. In certain embodiments, the triggers are delivered in the Digital Television (DTV) Closed Caption (CC) channel, in service #6, in a URI (or URL) String command, as specified in CEA 708.02 *Digital Television (DTV) Closed Captioning: Interactive Television Extensions.* As further described below, the presence of a trigger can be signaled by a predetermined URI type.

The ACR system 60 is utilized to provide the triggers via the Internet 30, for example, when the reception apparatus 20 does not have access to Closed Caption Service #6. In such a case, the reception apparatus 20 uses automatic content recognition to recognize video frames to receive associated triggers.

Triggers are multi-functional and a particular trigger instance can perform one or more of the following functions: (1) signal the location of a TPT (accessible via a File Delivery over Unidirectional Transport [FLUTE] session in the broadcast emission stream, via an Internet server, or both); (2) indicate the interactive content for an upcoming program segment (*e.g.,* a single show or a single piece of interstitial material) is available to be pre-loaded; (3) indicate the current media time of associated audio/video or audio-only content; and (4) indicate that accesses to an Internet server are to be spread out randomly over a specified time interval in order to avoid a peak in demand.

An exemplary trigger includes three parts: <domain name part> / <directory path> [? <parameters>]. The first two parts are required and the third is optional. The <domain name part> references a registered Internet domain name. The <directory path> is an arbitrary character string identifying a directory path under the control and management of the entity who owns rights to the identified domain name. For example, in a TDO model, the combination of <domain name part> and <directory path> uniquely identifies a TPT that can be processed by the reception apparatus 20 to add interactivity to associated content.

The <parameters> portion of the trigger is optional. When present, it can convey one or more parameters associated with the trigger such as one or a combination of <media time>, <spread>, and <event time>.

For example, <media time> may be designated by "m=" followed by a character string of 1 to 8 characters in length representing a hexadecimal number indicating a current media time in units of milliseconds, and an optional content id term designated by "c=" followed by a character string representing an identifier for the content currently being viewed. In another example, <spread> is designated by "s=" followed by a character string of 1 to 3 characters in length representing a decimal number indicating the number of seconds of time over which all receivers should attempt to access the Internet server identified in the trigger. Each receiver derives a random time within the designated interval and delay accessing the Internet server by that amount.

In another example, <event time> is designated by "e=" followed by two decimal numbers with a dot (".") between them, referencing an app ID in the associated TPT of the TDO targeted by the event and an event ID of the specific event, and an optional timing value term designated by "t=" followed by a string 1 to 8 characters in length representing a hexadecimal number indicating a new media timing for the designated event. If this optional timing value term is not present, the timing for the designated event is the arrival time of the trigger.

PDI data in the digital television service system 2 is used to implement a personalization scheme (PDI-PS) in the digital television service system 2. An objective of the PDI-based personalization scheme is to provide a method to manage filtering rules before delivering content to a user of the reception apparatus 20, using a PDI question/answer structure. The PDI server 70 stores PDI data (e.g., a PDI-Q), which can be retrieved by the reception apparatus 20 via the Internet 30 when the PDI data is not included in or otherwise not available from the broadcast emission stream.

Each question within a PDI-Q may be designated as common among a plurality of content sources or specific to a particular content source. A question identifier allows the reception apparatus 20 to identify a particular question. For example, a question common to all content sources may be the zip code of the user of the reception apparatus 20. In another example, a content source such as a sports channel may be interested in asking a pertinent sport related question to the user, such as the user's favorite sports team. In this case, the question identifier allows the content source to uniquely identify and associate the question to one or more content sources.

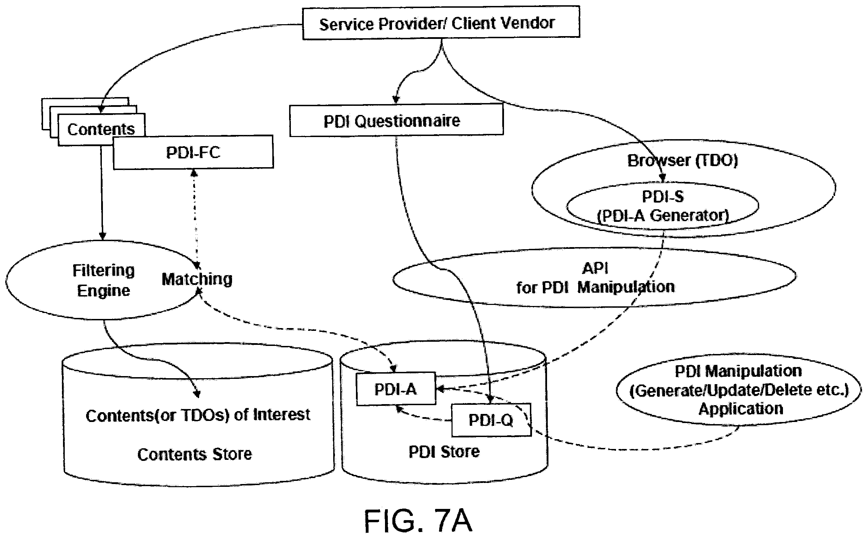

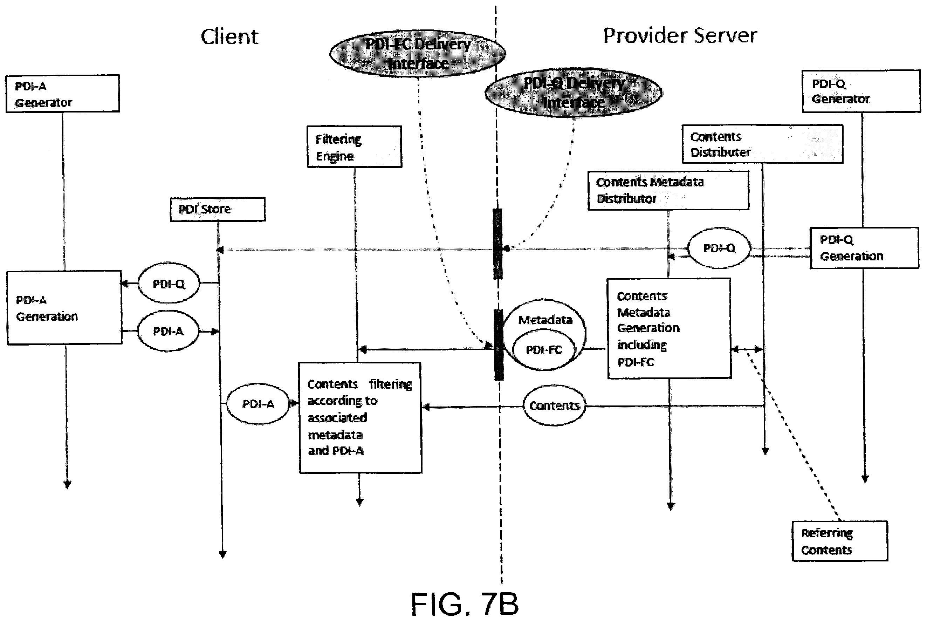

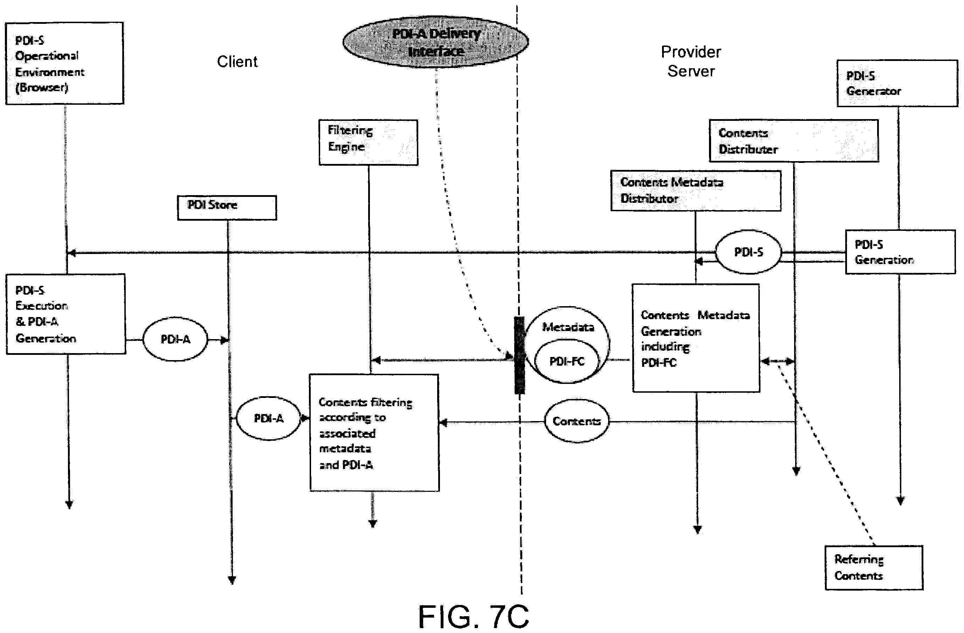

The reception apparatus 20 includes a functional component that enables the PDI-PS to obtain the filtering rules applied for delivered contents from a PDI store and then process filtering whenever content is delivered, stored, and consumed. Exemplary PDI processing flow diagrams are illustrated in Figures 7A-7C. For example, Figure 7A illustrates a PDI processing overview, Figure 7B illustrates a PDI-Q/A processing flow, and Figure 7C illustrates a PDI processing flow for a PDI-script.

A PDI-Q allows users to specify various information about themselves that can allow the reception apparatus 20 to tailor advanced services based on the users' individual interests and preferences. The PDI-Q is a downloadable questionnaire, in which each question is associated with a standardized message format. In one embodiment, the questionnaire includes a data structure having a standardized format common to one or more service providers.

The format of the PDI-Q includes questions, each with an answer in a predefined format. Exemplary answer formats include yes/no or true/false, text string (with maximum length), multiple choice, integer (with range limits), check list, among others.

A question may further include an optional lifetime parameter to denote a lifetime of an answer to the question or the question itself. For example, a PDI question/answer concerning the oldest member of the household includes a lifetime attribute that may be used to identify the number of time units (*e*.*g*. minutes, hours, days, weeks, months, years, etc.) before the applicability of the answer expires. In another example, the lifetime attribute is used to identify the duration of the question. Upon expiration of the question, the PDI questionnaire may be updated to seek alternative questions for use in subsequent filtering of content.

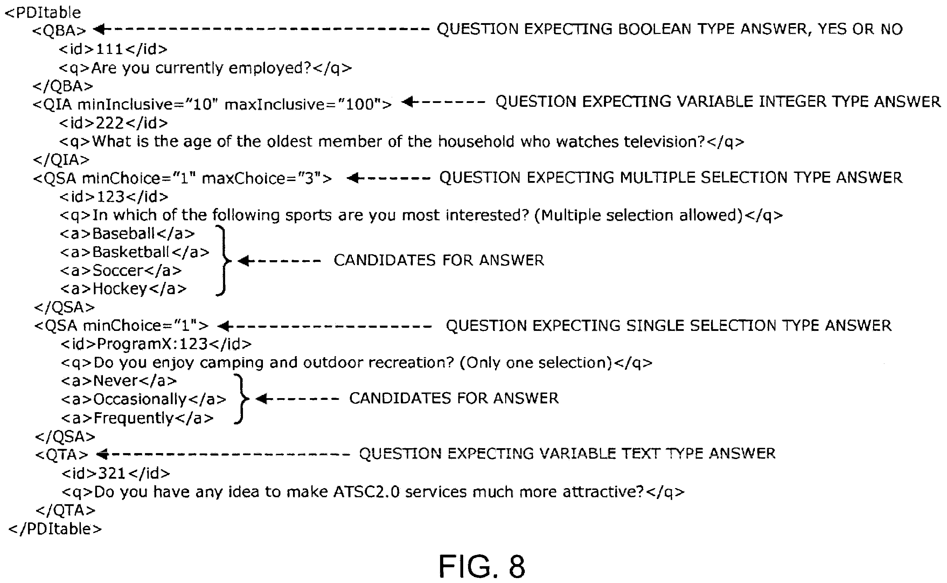

Figure 8 illustrates an example of a format and data structure of an exemplary PDI-Q. The PDI-Q and corresponding PDI answer(s) (PDI-A) define a set of common personalization parameters for targeting purposes. The set of common personalization parameters can be modified and extended, and the extensions can be delivered to the reception apparatus 20.

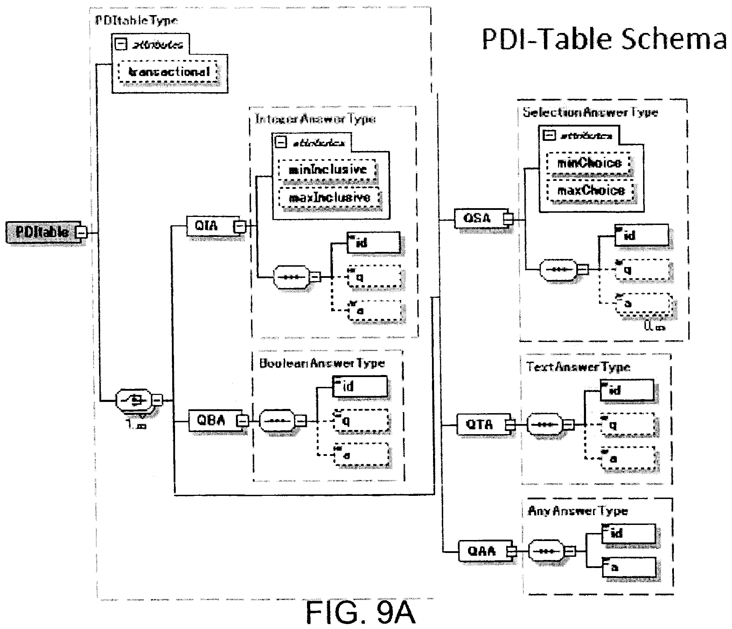

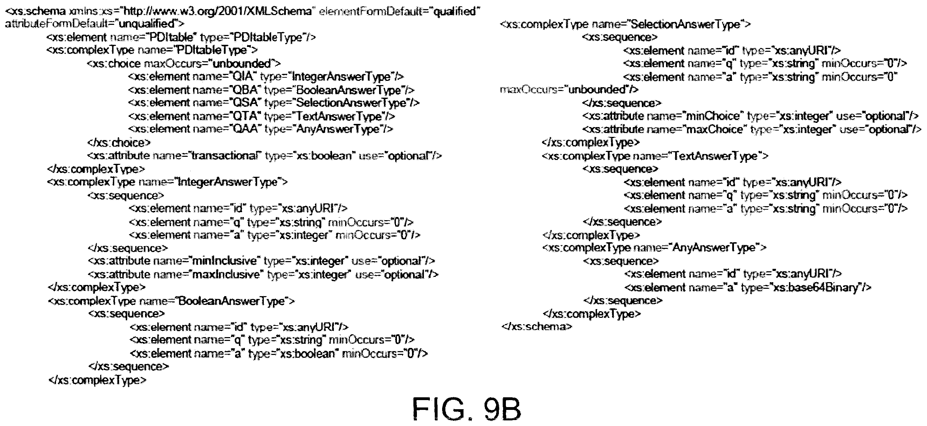

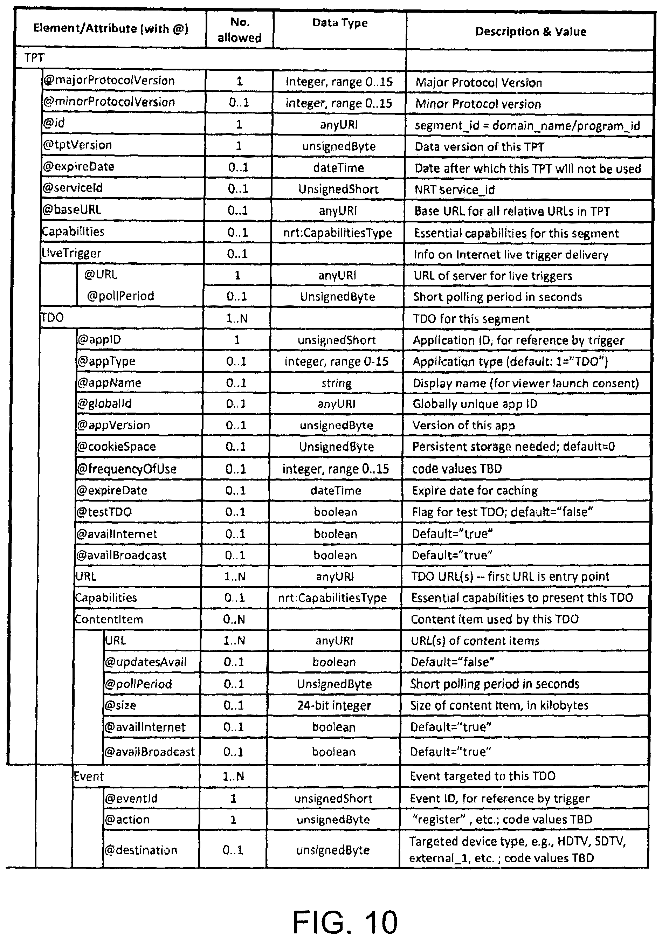

Figures 9A-9B illustrate exemplary PDI table schemas. As illustrated in Figures 10-11, the PDI table stores the PDI-Q and PDI-A sets. The table schema includes a table attribute associated with several answer types. For example, the answer types include one or more of a selection of answer types such as QIA, which refers to an integer answer type; QBA, which refers to a Boolean answer type; QSA, which refers to a selection answer type; QTA, which refers to a text answer type; and QAA, which refer to any answer type. Each answer type includes a question identifier, a question or inquiry associated with the question identifier, and an answer associated with the question identifier.

In certain embodiments, the PDI-Q and PDI-A are manipulated by a script (PDI-S) which can be run on a browser of the reception apparatus 20. The PDI-script is configured to write and generate PDI answers to a PDI-Q through a PDI manipulation application programming interface (API). As described above, exemplary processing related to the PDI-script is illustrated in Figure 7C.

A TPT is retrieved by the reception apparatus 20 in accordance with a received trigger. The URL for a TPT of a current segment appears in triggers delivered via DTV-CC service #6 or via the ACR server 60. For pre-produced content (*i.e*., non-live), the TPT that the reception apparatus 20 acquires after processing the trigger defines the timing of all elements of the interactive experience for that segment of content. The reception apparatus 20 and TDO play out the interactive elements using media timing, which is provided by certain triggers, and the TPT, which describes interactive elements relative to media time. For example, the TPT contains metadata about one or more TDOs of a segment and the events targeted to them.

For live content, the TPT still contains data and information pertinent to different interactive elements. However, the timing of play out of those events is not pre-defined. Instead, an "event-timing" function of the trigger is utilized. For example, the trigger signals that a specified interactive event is to be re-timed to a specified new value of media time. In another example, the trigger indicates that a certain event is to be executed immediately.

TDOs are downloadable objects created by a content creator or service provider. In one embodiment, TDOs consist of declarative content (e.g., scripts, text, and graphics) whose function and behavior are tied in some way to the television programming they accompany. In addition, a TDO may be designed to collect viewer response data such as answers to the PDI-Q. The information about the TDOs used in a segment and the associated TDO events that are initiated by triggers is provided by the TPT.

In the TDO model, signals are delivered in the broadcast emission stream or via the Internet in order to initiate TDO events, such as launching a TDO, terminating a TDO, or prompting some task by a TDO. These events are initiated at specific times, typically synchronized with an audio/video program. When a TDO is launched, it is configured to provide interactive features.

Further, in certain embodiments, PDI data (*e.g.,* the PDI-Q and/or PDI-A) stored in the reception apparatus 20 is accessible to TDOs. For example, a TDO being executed on a browser accesses a PDI-Q and PDI-A through an API and behaves based on the PDI answers. For example, a script in a TDO could offer a user a choice to select and purchase a baseball game program for a particular team based on the user's favorite team as specified in the PDI answers. In another example, different user experiences can be provided, such as the display of different text or graphics, branching to different audio/video content, and including different choices in a list.

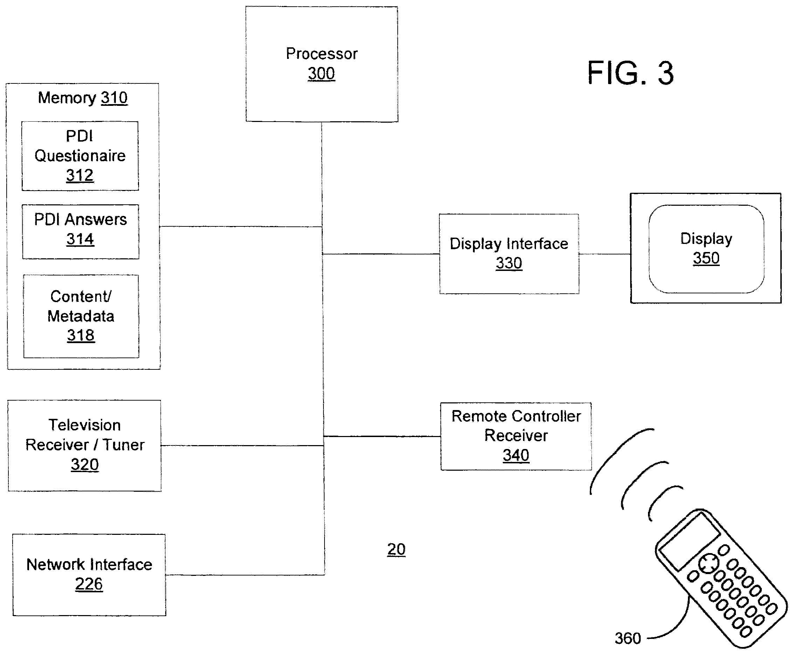

The reception apparatus 20 receives the content provided by the content source 10 and displays the content on a display 350, illustrated in Figure 3. In one embodiment, the display 350 is an integral part of the reception apparatus 20 such as a television set. Alternatively, the display 350 may be external to the reception apparatus 20 such as a television set connected to a set top box.

The reception apparatus 20 accesses the TPT server 40, TDO server 50, ACR system 60, and/or PDI server 70 via one or more communication networks such as the Internet 30. In certain embodiments, TPTs stored in the TPT server 40, the TDOs stored in the TDO server 60, and/or the PDI data stored in the PDI server 70 are provided to the reception apparatus 20 by the content source 10 or the ACR system 60.

The reception apparatus 20 includes a filtering engine that filters content or TDOs according to questionnaire answers and the PDI-FC. For example, the filtering engine matches a local advertisement based on a geographic region of a user as specified in his/her PDI answers. In another example, the filtering engine filters and stores content of interest based on the user's interests. For example, movie previews or trailers matching a preference (*e.g*., action, drama, comedy, etc.) of the user as set forth in his/her PDI answers are stored in memory 310.

In certain embodiments, the PDI-FC (*e.g*., content metadata) received at the reception apparatus 20 is tied to a PDI questionnaire by an ID value of the question in the questionnaire. Accordingly, the filtering engine can determine which PDI answer relates to the geographic location question.

Further, in certain embodiments, the reception apparatus 20 includes an API for PDI manipulation. The PDI manipulation API is configured to allow the reception apparatus 20 to store a PDI-Q in a PDI store, which is a database for PDI-Qs and PDI-As. Further, the reception apparatus 20 includes a PDI application. The PDI application is configured to allow a user to generate, update, and delete PDI answers to a PDI-Q. For example, the PDI application is implemented by a set-up screen on a display device coupled, or built-in, the reception apparatus 20.

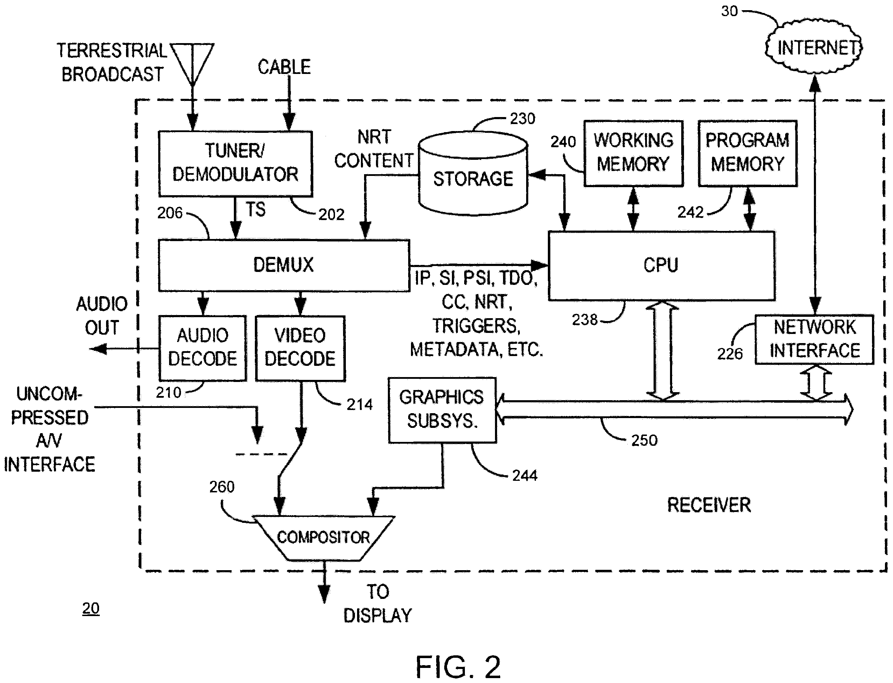

Figures 2 and 3 are block diagrams illustrating an embodiment of the reception apparatus 20 designed to receive both RT television broadcasts and NRT content. The reception apparatus 20 includes a tuner/demodulator 202, a demultiplexer 206, audio/video decoders 210, 214, a processing device 238 (*e.g.,* a CPU), and a storage device 230 (*e.g.,* a memory).

The tuner/demodulator 202 receives content from one or more content sources such as a terrestrial broadcast, IPTV service, or a cable television transmission. The reception apparatus 20 may also, or alternatively, receive content from a satellite broadcast. The tuner/demodulator 202 receives a transport stream (TS), which is demultiplexed by the demultiplexer 206 into audio and video (A/V) streams.

In one embodiment, the TS includes adjunct data such as one or more of caption data, TDOs, triggers, TPTs, etc. However, in other embodiments, the A/V content and/or a subset or all of the adjunct data may be received via the Internet 30 and a network interface 226.

The audio is decoded by an audio decoder 210 and the video is decoded by a video decoder 214. Further, uncompressed A/V data may be received via an uncompressed A/V interface (*e.g*., a HDMI interface) that can be selectively utilized. Demultiplexer 206 demultiplexes the stream to produce data to processing device 238. In the case of conventional real-time (linear) TV content, audio and video packets from tuner/demodulator 202 are supplied, via demultiplexer 206, to A/V decoders 210, 214 for decoding. A/V decoders 210, 214 supply an audio output signal and a video output signal to a TV's audio and video circuit.

Content including audio/video, PDI data, NRT files, metadata, and TDOs received at demultiplexer 206 is routed via processing device 238 to storage device 230. In one embodiment, storage device 230 corresponds to memory 310, which stores PDI-Q 312, PDI-Q answers (PDI-A) 314, and content and metadata 318. In one embodiment, the PDI-Q is offered in downloadable format and generated by at least one service provider having a standardized data structure. In other embodiments, the PDI-Q is generated by the content creator.

Storage device 230 may include a disc drive, a non-volatile memory, or any other types of data storage device. When a user instructs the system to play a selected item of NRT content, that content is then processed by processing device 238 and demultiplexed by demultiplexer 206 to provide audio and video packets to A/V decoders 210, 214 to be eventually presented to the user.

The reception apparatus 20 generally operates under control of at least one processor, such as processing device 238, which is coupled to a working memory 240, program memory 242, and a graphics subsystem 244 via one or more buses (*e.g*., bus 250). The processing device 238 receives closed caption data from the demultiplexer 206 as well as any other information such as TDO announcements and EPGs used for rendering graphics, and passes the information to the graphics subsystem 244. The graphics outputted by the graphics subsystem 244 are combined with video images by the compositor and video interface 260 to produce an output suitable for display on a video display. Further, the processing device 238 receives non-closed caption text data including, for example, a PDI locator, as further described below.

The processing device 238 operates to carry out functions of the reception apparatus 20 including the processing of related triggers, PDI-related activities (*e.g*., extraction of a PDI locator included in the closed caption data, retrieval of the PDI data based on the PDI locator, etc.), TDOs, TPTs, and browser operations. The browser operations include accessing a service specified by a URL given by the TDO or trigger. The processing device 238 further operates to execute script objects (control objects) contained in the TDO, its trigger(s), etc., using for example a declarative object (DO) engine configured to execute the TDO.

Although not illustrated in Figure 2, the processing device 238 may be coupled to any one or a combination of the reception apparatus 20 resources to centralize control of one or more functions. In one embodiment, the processing device 238 also operates to oversee control of the reception apparatus 20 including the tuner/demodulator 202 and other television resources.

A more processor-centric view of the reception apparatus 20 is illustrated in Figure 3. Memory and storage 230, 240, and 242 are depicted collectively as memory 310. Further, a processor 300 includes one or more processing units such as processing device 238. Similarly, the various demodulators, decoders, etc., that initially process digital television signals are collectively depicted as television receiver/tuner 320.

The reception apparatus 20 further includes a remote controller 360 which communicates with a remote controller receiver interface 340. Additionally, the display 350 is connected to a display interface 330, which includes for example the uncompressed A/V interface and/or compositor 260, and is either a display integral to the reception apparatus 20 as in a television set or a connected display device as in the case where the reception apparatus 20 is integrated into a set-top box.

Memory 310 contains various functional program modules and data. The memory 310 stores the data used by the reception apparatus 20. The memory 310 within the reception apparatus 20 can be implemented using disc storage form as well as other forms of storage such as non-transitory storage devices including for example network memory devices, magnetic storage elements, magneto-optical storage elements, flash memory, core memory and/or other non-volatile storage technologies. In one embodiment, the memory 310 stores one or a combination of the PDI-Q 312, PDI-A 314, and content/metadata 318. It is noted that the term "non-transitory" is a limitation of the medium itself (*i.e*., tangible, not a signal) as opposed to a limitation on data storage persistency (*e.g*., RAM vs. ROM).

As noted above, PDI data may be received by the demultiplexer 206 or be received in downloadable form via network interface 226. While some digital television receiver devices will be able to access the full broadcaster Transport Stream, including adjunct data *(e.g.,* PDI data such as the PDI-Q), other receivers will only be able to access advanced services through a method that offers access only to compressed audio/video and the digital television closed-captioning stream.

For example, in one embodiment, the reception apparatus 20 accesses a broadcast service via network connectivity to a cable or satellite receiver in a home network. In such a case, compressed audio and video can be streamed from the cable or satellite receiver (*e.g*., a set top box) to the digital television receiver.

The FCC requires digital cable set-top boxes to include a home network interface capable of conveying closed captioning data associated with the streamed program. In a recent FCC ruling, after the end of 2012 digital cable set top boxes in the U.S. must support home network interfaces allowing devices on the network to access compressed audio/video for decoding and recording. Digital Living Network Alliance (DLNA) protocols are being finalized for this purpose. This method affords a new path for delivery of compressed video (including closed captioning).

Although no specification exists to transport the caption data stream across the current HDMI interface, a "partial" TS can be accessed by means of DLNA methods now being standardized and required by FCC rules. In another embodiment, if the HDMI interface is modified to carry the caption data stream, the partial TS can be accessed from the HDMI interface instead of using the DLNA methods.

Embodiments of the present disclosure address the need for a digital television receiver (e.g., reception apparatus 20) to access data needed for personalization of the user's experience of the interactive elements of the service. For example, the receiver will need a way to retrieve PDI data such as the PDI-Q from an Internet source in the case that PDI data present in the Transport Stream (or broadcast multiplex) is unavailable to that receiver. The personalization of the user's experience using the PDI-Q is described in related applications.

Accordingly, in one embodiment, the DTV-CC stream is used to convey the location on the Internet of PDI data (*e.g.,* PDI -Q). For example, various types of URIs (*e.g.,* an interactive TV trigger or service usage reporting server locator) can be signaled in the DTV-CC stream, in Standard caption service #6. In one embodiment of the disclosure, one of the "URI type" code points in the proposed CEA-708.2 standard is utilized to identify the location of an Internet server (*e.g*., PDI server 70) where a service provider's PDI-Q instance document can be retrieved.

A new "URI type" (*e.g.,* PDI locator) is added to define the URI for a PDI-Q. For example, an unused "URI type" between 0x40 - 0x7F, such as 0x42 is assigned to the PDI locator, as illustrated in the table below.

| **URI_type** | **Meaning** |
|---|---|
| 0x00 - 0x3F | Reserved for use in CEA standards |
| 0x40 | Interactive TV Trigger |
| 0x41 | Service Usage Reporting Server (SURS) Locator |
| 0x42 | PDI Locator |
| 0x43-0x7F | Reserved for future ATSC use |
| 0x80 - 0xFF | Reserved for future assignment by CEA |

However, other values for URI_type may be used to distinguish the types of URIs as illustrated, for example, in the following table.

| **URI_type** | **Meaning** |
|---|---|
| 0 | Interactive TV Trigger |
| 1 | Service Usage Reporting Server (SURS) locator |
| 2 | PDI Locator |
| 3-15 | Reserved for future use |

Further, the Internet location of the PDI-Q information may be provided by other URI types, such as for example the service usage reporting server (SURS) URI. For example, when the SURS also provides an Internet-based source of the PDI data, the same URI may be identified as both a type 0x41 (SURS locator) as well as a type 0x42.

In one embodiment, when both types 0x41 and 0x42 are utilized, URI information included in both types are combined to determine the directory path (source) of the PDI data (*e.g*., abc.com/pdi/). For example, the SURS locator URI identifies an Internet server (*e.g*., abc.com) while the PDI locator URI identifies a location of the PDI information within the Internet server (*e.g*., subdirectory, file name, etc.)

In one embodiment, when the location of the PDI data is transported within the broadcast emission stream, the location of the PDI data is signaled within a message delivered in the DTV-CC Channel, in standard caption service #6, in a command called "URL String", as a URI_type=0x42 URL (PDI locator). Based on the size of the PDI locator, the PDI locator may be segmented into a plurality of segments.

When the PDI locator is separated into a plurality of segments, each segment is associated with a type that indicates whether the respective segment is (1) the first of two or more; (2) neither the first nor the last; (3) the last; and (4) the one-and-only. Any predefined values may be used to identify the type of a particular segment. Further, in one embodiment, the type information defines the sequential order of the segments. In other embodiments, the type information may be used to convey any information about the segments to allow the reception apparatus 20 to reconstruct the PDI locator.

For example, if the PDI locator is less than or equal to 26 characters in length, it is sent non-segmented (e.g., Type=11). If the PDI locator is 27 to 52 characters in length, it is sent in two segments (the first segment in a Type=00 segment and the second segment in a Type=10 segment). However, in other embodiments, any other criteria can be used to determine how the PDI data should be segmented. Further, other service numbers may be used in addition, or as an alternative, to using service number 6.

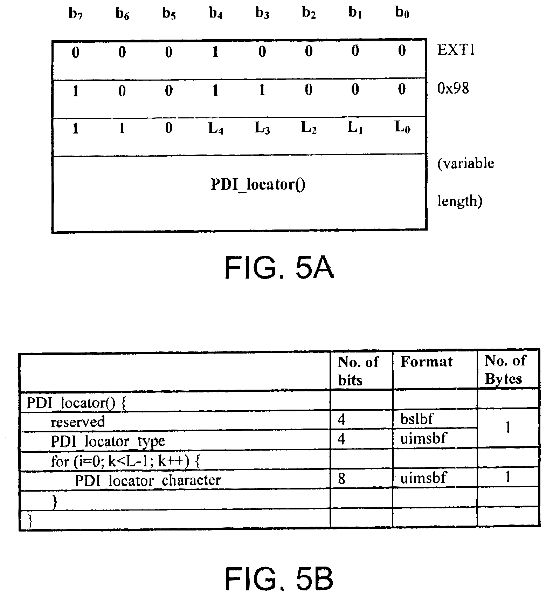

The segment type information may be stored in the type field of a URI string command, as illustrated for example in Figure 5A. The type field is a 2-bit field that indicates whether the instance of URI string command is part of a segmented command, and if so, whether the instance is the first or last segment. In one example, the type field is encoded as follows: first segment and segmented command (type=00), forbidden (type=01), last segment of segmented command (type=10), and full URL delivered in one segment (type-11).

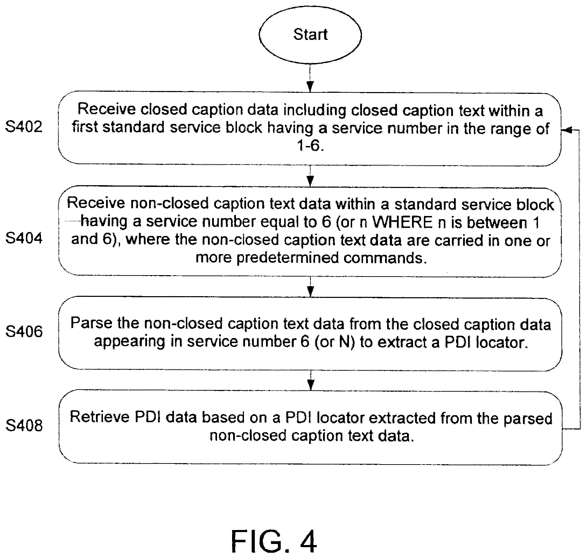

Figure 4 illustrates an exemplary process performed by the reception apparatus 20 when the PDI locator is delivered via the DTV-CC channel. The reception apparatus 20 has access to such PDI locator when, for example, it has access to the full MPEG-2 Transport Stream or a portion of the full broadcast multiplex at least including compressed video.

The process begins at S402 where closed caption data including closed caption text is received within a first Standard service block having a pre-determined service number in the range of 1-6. At S404, non-closed caption text data is received within a Standard service block having a service number equal to a pre-determined number. In general, the Standard service used for the non-closed caption text data could be any one or a combination of service numbers n between 1 and 6, but since it is relatively rare for more than the first few of the service numbers to be used for caption text data, service number 6 is used in one embodiment.

At step S406, the reception apparatus 20 parses (*e.g*., in a parsing computer process module) the non-closed caption text data from the closed caption text data appearing in service number 6 (or n) to extract the PDI locator. The non-closed caption text data is then processed at step S408 (*e.g.,* in another processor operation) to retrieve the PDI data based on the extracted PDI locator. In one embodiment, the above-referenced non-closed caption text data are carried in a CEA-708 compliant variable length command. However, in other embodiments, the non-closed caption text data are carried in a CEA-708 fixed length command or a combination of variable and fixed length commands.

It should be noted that the DTV-CC channel may also carry other types of data as an alternative or in addition to the PDI locator (*e.g*., the PDI data, PDI-Q, trigger, TDO URI, TPT URI, etc.). These other types of data may be provided via one or more Standard service blocks having pre-determined number(s) different from the Standard service block carrying the PDI locator (*e.g*., Service #5, 4, or 3) or utilize different predetermined command code sequences in the same Standard service block as the PDI locator.

In one embodiment, the PDI locator is delivered using one of the unused code points, *e.g*., 0x98 in the CEA-708 C3 code space to deliver variable-length PDI data. See Figure 5A for an example specification in the format of a CEA standard (*e.g*., as an extension to CEA-708). The PDI locator is a variable-length command delivered in, for example, the C3 code set as defined in CEA-708.

The URI string command illustrated in Figure 5A provides for the transport of PDI locator data. As described above, in one embodiment, the URI string command is transported in Standard caption service #6. In the command coding above, the Length (L) is an unsigned integer that indicates the number of bytes following the header, in the range 2 to 27, or 11 to 27.

As specified in CEA-708-D Section 7.1.11.2, variable-length commands are indicated by the EXT1 character followed by a number in the range 0x90 to 0x9F, where the "0x" notation denotes a number represented in hexadecimal format. In the command format depicted in Figure 4B, the EXT1 character (0x10) is followed by 0x98. In this context, 0x98 is the command identifier for the URI string command. However, any other unused command identifier can be associated with the URI string command. In accordance with the syntax defined in CEA-708-D Section 7.1.11.2, the next byte contains a two-bit Type field, a zero bit, followed by a 5-bit length field. In another embodiment, a dedicated PDI locator command may be used and assigned, for example, the command identifier 0x98.

In one embodiment, the PDI locator data is transported in a more general message structure that allows delivery of various types of URI strings. The URI string itself follows the byte containing the length field and a byte indicating the type of URI included.

The syntax of one example of the URI data is depicted in Figure 5B in pseudo code. In the exemplary URI_string() syntax of Figure 5B, URI_string_type is a 4-bit, or 8-bit, unsigned integer that indicates the type of URI data to be provided in the message. For example, the value of URI_string_type is set to 2 to indicate the URI is a PDI locator. However, other URI_string_type values may be used to identify the URI as a PDI locator. The reception apparatus 20 is expected to disregard instances of the URI String command indicating URIs of unrecognized types. Further, when a URI is sent in two segments, the URI_string_type is the same for both segments

In one embodiment, the field used to signal the type of URI carried in the message is 8 bits in length and the code space is segmented to allow certain standards developing organizations (SDOs) to assign values in their assigned range.

Further, URI_character is an 8-bit ASCII character whose value is restricted to those allowed for Uniform Resource Identifiers (URIs) by RFC 2396 (or RFC 3986). The character string formed by the assembled URI character values is a valid URI per RFC 2396 (or RFC 3986). However, other bit lengths (*e.g*., 4) may be used for the URI_string_type and/or URI_character.

Use of a variable-length DTV-CC command in Service #6 to transport the PDI locator data provides: (1) robust (explicit) signaling of the presence of the PDI locator data; (2) a transport format that is a natural extension to the existing CEA-708 DTV-CC protocol; and (3) a transport method that is transparent to legacy receivers.

The PDI locator may also be transported via other paths such as the Internet. In one embodiment, when the PDI locator is not available via the broadcast emission stream, the reception apparatus 20 acquires the PDI locator via the ACR system 60 by, for example, sending A/V samples of the content being received by the reception apparatus 20 to the ACR system 60.

When the reception apparatus 20 has no access to either the broadcast TS or broadcast triggers, in one embodiment, the reception apparatus 20 identifies the content being watched and the Media Time by means of the ACR system 60. In one embodiment, PDI data is retrieved from the Internet server (e.g., PDI server 70) based on a PDI locator provided by the ACR system 60. In another embodiment, a TPT containing the PDI locator is retrieved from an Internet server (*e.g*., TPT server 40) based on a trigger returned from the ACR system 60.

However, other methods for identifying the location of the PDI data (*e.g.,* the PDI-Q) may be used. For example, the PDI locator may be provided in a TPT; or delivered in-band. In other embodiments, the PDI locator may be embedded in the content itself. For example, the PDI locator may be embedded in an audio or a video portion (e.g., modulated within the video itself in luminance or chrominance) of the content and recovered by processing of the decoded audio or the video in the reception apparatus 20. In another embodiment, a trigger identifying the location of a TPT containing an entry identifying the PDI locator is embedded in the audio or video portion of the content or the DTV-CC stream.

In one embodiment, the location of a server providing the PDI data is defined in a TPT by means of TPT.TDO.content_item.URL or TPT.TDO, as illustrated in Figure 10. Exemplary semantics of the fields in the TPT are illustrated in Figure 10. The reception apparatus 20 may be configured, for example, to obtain the PDI data based on the PDI location information defined in the TPT at the time the TPT is first received or in response to a trigger.

In another embodiment, the location of the PDI-Q is delivered in-band. For example, the PDI data may be carried in an IP subnet, of the Transport Stream, that includes one or a combination of one or more Service Signaling Channels (SSC) and one or more FLUTE sessions. FLUTE is defined in RFC 3926. Further, the transfer of non-real-time content delivery via an MPEG-2 Transport Stream is described, for example, in "ATSC Standard A/103: Non-Real-Time Content Delivery,".

When the PDI data is included in the Transport Stream, the reception apparatus 20, by nature of its access to the broadcast signal, is able to access the location of the PDI data via the transport stream, regardless of whether the reception apparatus 20 has access to a communication network (e.g., the Internet). In one embodiment, the location of the PDI data is provided in one or more FLUTE sessions and is referenced and extracted using a FLUTE File Delivery Table (FDT) for example, in a manner similar to the manner in which non-real time services are provided in U.S. Patent No. 8,099,752, patented January 17, 2012.

In one embodiment, the FLUTE/FDT itself is utilized, without requiring the use of a non-real-time information table (NRT-IT) or other similar "adjunct services table" when, for example, the location of the PDI data is included in the DTV-CC stream, a trigger, etc. In other embodiments, the location of the PDI data in the FLUTE is identified via a descriptor or flag in the NRT-IT or via a service-level descriptor (in SMT, VCT, or PSI table). The descriptor or NRT-IT signaling method can reference one or more files, which contains the PDI locator, in a FLUTE carousel present in the Transport Stream.

In the case that a URI of the server directory containing the PDI data is provided to the reception apparatus 20 but the directory contains a number of other content items, various methods may be used to identify which file is the PDI data. These methods include, but are not limited to:
(1) Standardizing a filename convention, such as using the name "pdi-q.xml" to identify the file in the target directory. In one embodiment, the reception apparatus 20 is configured to retrieve one or more predetermined filenames from the target directory. In one embodiment, a predetermined file name is provided for each of the PDI-Q and any other required PDI data. The reception apparatus 20 is configured to retrieve any one or a combination of the PDI data types contained in the server directory;
(2) Standardizing a directory path convention, such as using the name "pdi" to identify a subdirectory below the identified target directory where PDI data will be found. In one embodiment, the reception apparatus 20 may be configured to retrieve all or a subset of the files contained in the predetermined subdirectory.
(3) Using another method of indirection, where for example a predetermined first file contains the specific name and location of one or more PDI data files. In one embodiment, the reception apparatus 20 acquires the first file and uses it to determine the location of the PDI data. In other embodiments, the first file identifies a particular filename and/or subdirectory to facilitate PDI data retrieval.
(4) Submitting a request for the PDI data to a script identified by the URI. In one embodiment, the script determines which PDI data files to provide to the reception apparatus 20. In another embodiment, the script returns the name and/or location of the one or more PDI data files for subsequent retrieval by the reception apparatus 20.

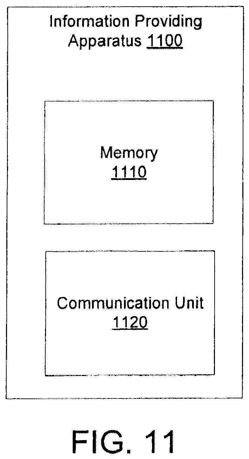

Figure 11 illustrates an information providing apparatus 1100, which may be included in the content source 10, TPT server 40, TDO server 50, ACR system 60, PDI server 70, or a stand-alone device. As illustrated in Figure 11, the information providing apparatus 1100 includes a memory 1110 and a communication unit 1120. The memory 1110 can be implemented using disc storage form as well as other forms of storage such as non-transitory storage devices including for example network memory devices, magnetic storage elements, magneto-optical storage elements, flash memory, core memory and/or other non-volatile storage technologies. Further, the communication unit 1120 can be implemented using any one or a combination of a terrestrial broadcast transmitter, a cable broadcast transmitter, a satellite uplink transmitter, a network interface (e.g., WLAN card, Ethernet card, etc.), or the like.

The memory 1110 is configured to store PDI data. The communication unit 1120 provides the PDI data stored in the memory 1110 to the reception apparatus 20. For example, the communication unit 1120 provides the PDI data to the reception apparatus 20 via the TS or the Internet. The PDI data is provided at a location identified by a PDI locator provided to the reception apparatus 20.

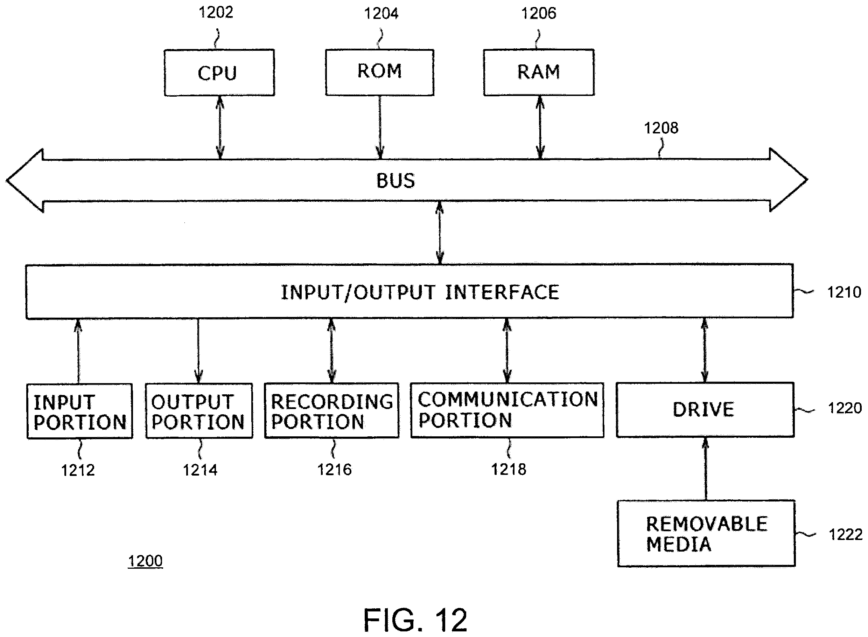

Figure 12 is a block diagram showing an example of a hardware configuration of a computer 1200 configured to function as any one or a combination of the content source 10, reception apparatus 20, TPT server 40, TDO server 50, ACR system 60, PDI server 70, and information providing apparatus 1100.

As illustrated in Figure 12, the computer 1200 includes a central processing unit (CPU) 1202, read only memory (ROM) 1204, and a random access memory (RAM) 1206 interconnected to each other via one or more buses 1208. The one or more buses 1208 are further connected with an input-output interface 1210. The input-output interface 1210 is connected with an input portion 1212 formed by a keyboard, a mouse, a microphone, remote controller, etc. The input-output interface 1210 is also connected to a output portion 1214 formed by an audio interface, video interface, display, speaker, etc.; a recording portion 1216 formed by a hard disk, a non-volatile memory, etc.; a communication portion 1218 formed by a network interface, modem, USB interface, fire wire interface, etc.; and a drive 1220 for driving removable media 1222 such as a magnetic disk, an optical disk, a magneto-optical disk, a semiconductor memory, etc.

According to one embodiment, the CPU 1202 loads a program stored in the recording portion 1216 into the RAM 1206 via the input-output interface 1210 and the bus 1208, and then executes a program configured to provide the functionality of the one or combination of the content source 10, reception apparatus 20, TPT server 40, TDO server 50, ACR system 60, PDI server 70, and information providing apparatus 1100.

The various processes discussed above need not be processed chronologically in the sequence depicted as flowcharts; the steps may also include those processed parallelly or individually (*e.g*., in paralleled or object-oriented fashion).

Also, the programs may be processed by a single computer or by a plurality of computers on a distributed basis. The programs may also be transferred to a remote computer or computers for execution.

Furthermore, in this specification, the term "system" means an aggregate of a plurality of component elements (apparatuses, modules (parts), etc.). All component elements may or may not be housed in a single enclosure. Therefore, a plurality of apparatuses each housed in a separate enclosure and connected via a network are considered a network, and a single apparatus formed by a plurality of modules housed in a single enclosure are also regarded as a system.

Also, it should be understood that this technology when embodied is not limited to the above-described embodiments and that various modifications, variations and alternatives may be made of this technology.

For example, this technology may be structured for cloud computing whereby a single function is shared and processed in collaboration among a plurality of apparatuses via a network.

Also, each of the steps explained in reference to the above-described flowcharts may be executed not only by a single apparatus but also by a plurality of apparatuses in a shared manner.

Furthermore, if one step includes a plurality of processes, these processes included in the step may be performed not only by a single apparatus but also by a plurality of apparatuses in a shared manner.

Numerous modifications and variations of the present disclosure are possible in light of the above teachings. It is therefore to be understood that within the scope of the appended claims, the embodiments may be practiced otherwise than as specifically described herein.

The above disclosure also encompasses the embodiments noted below.
(1) A method of a reception apparatus for retrieving Profiles, Demographics, and Interests (PDI) data, including a PDI questionnaire, the method including receiving content from a content source; displaying the received content on a display; determining a location of the PDI data associated with the received content; and retrieving, by the reception apparatus, the PDI data based on the determined location of the PDI data.
(2) The method of feature (1), in which the step of determining includes determining the location of the PDI data associated with the received content based on a PDI locator extracted from closed caption data associated with the received content.
(3) The method of feature (2), further including extracting the PDI locator from non-closed caption text data within a service block having a service number in the range of 1-6.
(4) The method of feature (3), in which the step of extracting includes extracting the PDI locator from non-closed caption text data within a service block having a service number of 6.
(5) The method of feature (1), in which the step of determining includes determining the location of the PDI data associated with the received content based on a PDI locator extracted from a triggered declarative object parameters table (TPT) associated with the received content.
(6) The method of features (1) to (5), in which the step of determining includes determining the location of the PDI data associated with the received content based on a PDI locator identifying a location of the PDI data in a File Delivery over Unidirectional Transport (FLUTE) carousel extracted from a Transport Stream carrying the content.
(7) The method of any of features (1) to (6), in which the step of receiving content includes receiving the content via at least one of a satellite broadcast, a cable television transmission, a terrestrial television broadcast, and the Internet.
(8) The method of any of features (1) to (7), in which the step of retrieving includes retrieving, by the reception apparatus, the PDI data based on the determined location of the PDI data and one or a combination of a predetermined filename, a predetermined directory path, and a PDI location file.
(9) A computer-readable storage medium storing a program, which when executed by a computer, causes the computer to perform the method of any of features (1) to (8).
(10) A reception apparatus, including a receiver configured to receive content from a content source; a display interface configured to output the received content; a processor configured to determine a location of Profiles, Demographics, and Interests (PDI) data, including a PDI questionnaire, associated with the received content, and retrieve the PDI data based on the determined location of the PDI data.
(11) The reception apparatus of feature (10), in which the processor is configured to determine the location of the PDI data associated with the received content based on a PDI locator extracted from closed caption data associated with the received content.
(12) The reception apparatus of feature (11), further including an extraction unit configured to extract the PDI locator from non-closed caption text data within a service block having a service number in the range of 1-6.
(13) The reception apparatus of feature (12), in which the extraction unit is configured to extract the PDI locator from non-closed caption text data within a service block having a service number of 6.
(14) The reception apparatus of features (10), in which the processor is configured to determine the location of the PDI data associated with the received content based on a PDI locator extracted from a triggered declarative object parameters table (TPT) associated with the received content.
(15) The reception apparatus of any of features (10) to (14), in which the processor is configured to determine the location of the PDI data associated with the received content based on a PDI locator identifying a location of the PDI data in a File Delivery over Unidirectional Transport (FLUTE) carousel extracted from a broadcast multiplex carrying the content.
(16) The reception apparatus of any of features (10) to (15), in which the receiver is configured to receive the content via at least one of a satellite broadcast, a cable television transmission, a terrestrial television broadcast, and the Internet.
(17) The reception apparatus of any of features (10) to (15), in which the processor is configured to retrieve the PDI data based on the determined location of the PDI data and one or a combination of a predetermined filename, a predetermined directory path, and a PDI location file.
(18) The reception apparatus of any of features (10) to (17), in which the receiver is configured to receive the content via at least one of a satellite broadcast, a cable television transmission, a terrestrial television broadcast, and the Internet.
(19) An information providing apparatus, including a memory configured to store Profiles, Demographics, and Interests (PDI) data, including a PDI questionnaire; and a communication unit configured to provide the PDI data to a reception apparatus at a location identified by a PDI locator provided to the reception apparatus.

## Claims

1. A method for retrieving and using Profiles, Demographics, and Interests (PDI) data, including a PDI-Q questionnaire, at a reception apparatus (20), said method comprising the following steps:
receiving a broadcast stream, which includes: content from a content source (10), and metadata (PDI-FC) associated with said content, said metadata describing the available content;
extracting from the received broadcast stream a Uniform Resource Identifier (URI) and a URI type that is associated with said URI;
determining if the URI is a PDI locator based on the extracted URI type;
determining the location of the PDI data associated with the received content based on the PDI locator identifying a location of the PDI data in a File Delivery over Unidirectional Transport, FLUTE, carousel extracted from a Transport Stream carrying the content;
retrieving, by the reception apparatus (20), the PDI data including said PDI-Q questionnaire using the extracted URI when the extracted URI type indicates that the extracted URI is a PDI locator;
generating PDI-A answers to said retrieved PDI-Q questionnaire;
filtering the received content based on said PDI-A answers and said metadata (PDI-FC); and
outputting the filtered content for display.

2. The method according to claim 1, wherein the step of extracting comprises:
extracting the URI and the URI type from a closed caption channel associated with the received content.

3. The method according to claim 2, further comprising:
extracting the URI and the URI type from non-closed caption text data within a service block having a service number in the range of 1-6, in particular having a service number of 6.

4. The method according to claim 1, further comprising:
determining the location of the PDI data associated with the received content based on the PDI locator extracted from a triggered declarative object parameters table, TPT, associated with the received content.

5. The method according to any one of the preceding claims, wherein the step of receiving content comprises:
receiving the content via at least one of a satellite broadcast, a cable television transmission, a terrestrial television broadcast, and the Internet.

6. The method according to any one of the preceding claims, wherein the step of retrieving comprises:
retrieving, by the reception apparatus (20), the PDI data based on the extracted URI and one or a combination of a predetermined filename, a predetermined directory path, and a PDI location file.

7. A computer-readable storage medium storing a program, which when executed by a computer, causes the computer to perform a method of any one of the preceding claims.

8. A reception apparatus (20) for retrieving and using Profiles, Demographics, and Interest (PDI) data, including a PDI-Q questionnaire, said reception apparatus comprising:
a receiver (320) configured to receive a broadcast stream, which includes content from a content source (10), and metadata (PDI-FC) associated with said content, said metadata describing the available content;
a processor (300) configured to
extract from the received broadcast stream a Uniform Resource Identifier (URI)
and a URI type that is associated with said URI;
determine if the URI is a PDI locator based on the extracted URI type;
determine the location of the PDI data associated with the received content based on the PDI locator identifying a location of the PDI data in a File Delivery over Unidirectional Transport, FLUTE, carousel extracted from a Transport Stream carrying the content;
retrieve the PDI data including the PDI-Q questionnaire using the extracted URI when the extracted URI type indicates that the extracted URI is a PDI locator;
generate PDI-A answers to said retrieved PDI-Q questionnaire;
filter the received content based on said PDI-A answers and said metadata (PDI-FC); and
a display interface for outputting the filtered content for display.

9. The reception apparatus (20) according to claim 8, wherein the processor (300) is configured to extract the URI and URI type from a closed caption channel associated with the received content.

10. The reception apparatus (20) according to claim 9, further comprising:
an extraction unit configured to extract the URI and URI type from non-closed caption text data within a service block having a service number in the range of 1-6, in particular having a service number of 6.

11. The reception apparatus (20) according to any one of claims 8 to 10, wherein the processor (300) is configured to determine the location of the PDI data associated with the received content based on the PDI locator extracted from a triggered declarative object parameters table, TPT, associated with the received content.

12. The reception apparatus (20) according to any one of claims 8 to 11, wherein the receiver (320) is configured to receive the content via at least one of a satellite broad- cast, a cable television transmission, a terrestrial television broadcast, and the Internet.

13. The reception apparatus (20) according to any one of claims 8 to 11, wherein the processor (300) is configured to retrieve the PDI data based on the extracted URI and one or a combination of a predetermined filename, a predetermined directory path, and a PDI location file.

14. An information providing system, comprising:
an information providing apparatus (1100) including
a memory (1110) configured to store Profiles, Demographics, and Interests, PDI, data, including a PDI-Q questionnaire;
circuitry configured to
generate a Uniform Resource Identifier, URI, and a URI type that is associated with the URI, whereby the URI is a PDI locator that identifies a location of the PDI data;
generate a broadcast stream, which includes content to be output for display and the URI and the URI type;
transmit the broadcast stream to a reception apparatus;
a communication unit (1120) configured to provide the PDI data to the reception apparatus (20) at a location determined by the reception apparatus based on the URI and the URI type, and
a reception apparatus as claimed in claim 1.

## Patentansprüche

1. Verfahren zum Abrufen und Verwenden von Profil-, Demographie- und Interessendaten (PDI), einschließlich eines PDI-Q-Fragebogens, bei einer Empfangsvorrichtung (20), wobei das Verfahren die folgenden Schritte umfasst:
Empfangen eines Rundfunkstroms, der enthält: Inhalt von einer Inhaltsquelle (10) und Metadaten (PDI-FC), die mit dem Inhalt verbunden sind, wobei die Metadaten den verfügbaren Inhalt beschreiben;
Extrahieren eines Uniform Resource Identifier (URI) und eines URI-Typs, der mit dem URI assoziiert ist, aus dem empfangenen Rundfunkstrom;
Bestimmen, ob der URI ein PDI-Locator ist, basierend auf dem extrahierten URI-Typ;
Bestimmen des Ortes der PDI-Daten, die mit dem empfangenen Inhalt verbunden sind, basierend auf dem PDI-Locator, der einen Ort der PDI-Daten in einem File Delivery over Unidirectional Transport, FLUTE, Karussell identifiziert, das aus einem Transportstrom extrahiert wurde, der den Inhalt trägt;
Abrufen, durch die Empfangsvorrichtung (20), der PDI-Daten einschließlich des PDI-Q-Fragebogens unter Verwendung des extrahierten URI, wenn der extrahierte URI-Typ anzeigt, dass der extrahierte URI ein PDI-Locator ist;
Erzeugen von PDI-A-Antworten auf den abgerufenen PDI-Q-Fragebogen;
Filtern des empfangenen Inhalts basierend auf den PDI-A-Antworten und den Metadaten (PDI-FC); und
Ausgeben des gefilterten Inhalts zur Anzeige.

2. Verfahren nach Anspruch 1, wobei der Schritt des Extrahierens umfasst:
Extrahieren des URI und des URI-Typs aus einem Kanal für geschlossene Untertitel, der mit dem empfangenen Inhalt verbunden ist.

3. Verfahren nach Anspruch 2, das ferner umfasst:
Extrahieren des URI und des URI-Typs aus nicht-geschlossenen Untertitel-Textdaten innerhalb eines Dienstblocks mit einer Dienstnummer im Bereich von 1-6, insbesondere mit einer Dienstnummer von 6.

4. Verfahren nach Anspruch 1, ferner umfassend:
Bestimmen des Ortes der PDI-Daten, die dem empfangenen Inhalt zugeordnet sind, basierend auf dem PDI-Locator, der aus einer getriggerten deklarativen Objektparametertabelle, TPT, die dem empfangenen Inhalt zugeordnet ist, extrahiert wird.

5. Verfahren nach einem der vorhergehenden Ansprüche, wobei der Schritt des Empfangens des Inhalts umfasst:
Empfangen des Inhalts über mindestens eine von einer Satellitenübertragung, einer Kabelfernsehübertragung, einer terrestrischen Fernsehübertragung und dem Internet.

6. Verfahren nach einem der vorhergehenden Ansprüche, wobei der Schritt des Abrufens umfasst:
Abrufen, durch die Empfangsvorrichtung (20), der PDI-Daten basierend auf der extrahierten URI und einer oder einer Kombination aus einem vorbestimmten Dateinamen, einem vorbestimmten Verzeichnispfad und einer PDI-Ortsdatei.

7. Computerlesbares Speichermedium, das ein Programm speichert, das, wenn es von einem Computer ausgeführt wird, den Computer veranlasst, ein Verfahren nach einem der vorangehenden Ansprüche durchzuführen.

8. Empfangsvorrichtung (20) zum Abrufen und Verwenden von Profil-, Demographie- und Interessendaten (PDI), einschließlich eines PDI-Q-Fragebogens, wobei die Empfangsvorrichtung umfasst
einen Empfänger (320), der so konfiguriert ist, dass er einen Sendestrom empfängt, der Inhalt von einer Inhaltsquelle (10) und Metadaten (PDI-FC) enthält, die mit dem Inhalt verbunden sind, wobei die Metadaten den verfügbaren Inhalt beschreiben;
einen Prozessor (300), der konfiguriert zum
Extrahieren eines Uniform Resource Identifier (URI) und eines URI-Typs, der mit dem URI assoziiert ist, aus dem empfangenen Rundfunkstrom;
Bestimmen, ob der URI ein PDI-Locator ist, basierend auf dem extrahierten URI-Typ;
Bestimmen des Ortes der PDI-Daten, die mit dem empfangenen Inhalt verbunden sind, basierend auf dem PDI-Locator, der einen Ort der PDI-Daten in einem File Delivery over Unidirectional Transport, FLUTE, Karussell identifiziert, das aus einem Transportstrom extrahiert wurde, der den Inhalt trägt;
Abrufen, durch die Empfangsvorrichtung (20), der PDI-Daten einschließlich des PDI-Q-Fragebogens unter Verwendung des extrahierten URI, wenn der extrahierte URI-Typ anzeigt, dass der extrahierte URI ein PDI-Locator ist;
Erzeugen von PDI-A-Antworten auf den abgerufenen PDI-Q-Fragebogen;
Filtern des empfangenen Inhalts basierend auf den PDI-A-Antworten und den Metadaten (PDI-FC); und
einem Anzeig-Interface zum Ausgeben des gefilterten Inhalts zur Anzeige.

9. Empfangsvorrichtung (20) nach Anspruch 8, wobei der Prozessor (300) konfiguriert ist zum Extrahieren des URI und des URI-Typs aus einem Kanal für geschlossene Untertitel, der mit dem empfangenen Inhalt verbunden ist.

10. Empfangsvorrichtung (20) nach Anspruch 9, ferner umfassend:
eine Extrahierungseinheit zum Extrahieren des URI und des URI-Typs aus nicht-geschlossenen Untertitel-Textdaten innerhalb eines Dienstblocks mit einer Dienstnummer im Bereich von 1-6, insbesondere mit einer Dienstnummer von 6.

11. Empfangsvorrichtung (20) nach einem der Ansprüche 8 bis 10, wobei der Prozessor (300) konfiguriert ist zum
Bestimmen des Ortes der PDI-Daten, die dem empfangenen Inhalt zugeordnet sind, basierend auf dem PDI-Locator, der aus einer getriggerten deklarativen Objektparametertabelle, TPT, die dem empfangenen Inhalt zugeordnet ist, extrahiert wird.

12. Empfangsvorrichtung (20) nach einem der Ansprüche 8 bis 11, wobei der Empfänger (320) konfiguriert ist zum Empfangen des Inhalts über mindestens eine von einer Satellitenübertragung, einer Kabelfernsehübertragung, einer terrestrischen Fernsehübertragung und dem Internet.

13. Empfangsvorrichtung (20) nach einem der Ansprüche 8 bis 11, wobei der Prozessor (300) konfiguriert ist zum Abrufen, durch die Empfangsvorrichtung (20), der PDI-Daten basierend auf der extrahierten URI und einer oder einer Kombination aus einem vorbestimmten Dateinamen, einem vorbestimmten Verzeichnispfad und einer PDI-Ortsdatei.

14. Informationsbereitstellungssystem, umfassend
eine Informationsbereitstellungsvorrichtung (1100) mit
einem Speicher (1110), der so konfiguriert ist, dass er Profil-, Demographie- und Interessendaten, PDI, einschließlich eines PDI-Q-Fragebogens, speichert;
Schaltungen, die konfiguriert sind zum
Erzeugen eines Uniform Resource Identifier, URI, und eines URI-Typ, der mit dem URI verbunden ist, wobei der URI ein PDI-Locator ist, der einen Ort der PDI-Daten identifiziert;
Erzeugen eines Rundsendestroms, der den zur Anzeige auszugebenden Inhalt sowie den URI und den URI-Typ enthält;
Übertragen des Rundsendestroms an ein Empfangsgerät;
eine Kommunikationseinheit (1120), die so konfiguriert ist, dass sie die PDI-Daten der Empfangsvorrichtung (20) an einem Ort bereitstellt, der von der Empfangsvorrichtung basierend auf dem URI und dem URI-Typ bestimmt wird, und
eine Empfangsvorrichtung nach Anspruch 1.

## Revendications

1. Procédé pour récupérer et utiliser des données de profils, de démographie et d'intérêts (PDI), dont un questionnaire PDI-Q, au niveau d'un appareil de réception (20), ledit procédé comprenant les étapes suivantes :
recevoir un flux de diffusion, qui comprend : un contenu provenant d'une source de contenu (10), et des métadonnées (PDI-FC) associées audit contenu, lesdites métadonnées dé-crivant le contenu disponible ;
extraire du flux de diffusion reçu un identifiant uniforme de ressources (URI) et un type d'URI qui est associé audit URI ;
déterminer si l'URI est un localisateur PDI sur la base du type d'URI extrait ;
déterminer l'emplacement des données PDI associées au contenu reçu sur la base du locali-sateur PDI identifiant un emplacement des données PDI dans un carrousel de distribution de fichiers basés sur un protocole de transport unidirectionnel, FLUTE, extrait d'un flux de transport transportant le contenu ;
récupérer, par l'appareil de réception (20), les données PDI comprenant ledit questionnaire PDI-Q en utilisant l'URI extrait lorsque le type d'URI extrait indique que l'URI extrait est un localisateur PDI ;
générer des réponses PDI-A audit questionnaire PDI-Q récupéré ;
filtrer le contenu reçu sur la base desdites réponses PDI-A et desdites métadonnées (PDI-FC) ; et
délivrer en sortie le contenu filtré pour affichage.

2. Procédé selon la revendication 1, dans lequel l'étape d'extraction comprend :
l'extraction de l'URI et du type d'URI à partir d'un canal de sous-titres codés associé au contenu reçu.

3. Procédé selon la revendication 2, comprenant en outre l'étape suivante :
extraire l'URI et le type d'URI à partir de données textuelles de sous-titres non codés dans un bloc de service ayant un numéro de service situé dans la plage de 1 à 6, en particulier ayant un numéro de service de 6.

4. Procédé selon la revendication 1, comprenant en outre l'étape suivante :
déterminer l'emplacement des données PDI associées au contenu reçu sur la base du locali-sateur PDI extrait d'une table de paramètres d'objets déclaratifs déclenchés, TPT, associée au contenu reçu.

5. Procédé selon l'une quelconque des revendications précédentes, dans lequel l'étape de réception du contenu comprend :
la réception du contenu par l'intermédiaire d'au moins un moyen parmi une diffusion par satellite, une transmission de télévision par câble, une diffusion de télévision terrestre et Internet.

6. Procédé selon l'une quelconque des revendications précédentes, dans lequel l'étape de récupération comprend :
la récupération, par l'appareil de réception (20), des données PDI sur la base de l'URI extrait et d'une ou d'une combinaison des éléments suivants : un nom de fichier prédéterminé, un chemin de répertoire prédéterminé, et un fichier d'emplacement PDI.

7. Support de stockage lisible par ordinateur stockant un programme, qui, lorsqu'il est exécuté par un ordinateur, amène l'ordinateur à exécuter un procédé de l'une quelconque des revendications précédentes.

8. Appareil de réception (20) pour récupérer et utiliser des données de profils, de démographie et d'intérêt (PDI), dont un questionnaire PDI-Q, ledit appareil de réception comprenant :
un récepteur (320) configuré pour recevoir un flux de diffusion, qui comprend un contenu provenant d'une source de contenu (10), et des métadonnées (PDI-FC) associées audit con-tenu, lesdites métadonnées décrivant le contenu disponible ;
un processeur (300) configuré pour :
extraire du flux de diffusion reçu un identifiant uniforme de ressources (URI) et un type d'URI qui est associé audit URI ;
déterminer si l'URI est un localisateur PDI sur la base du type d'URI extrait ;
déterminer l'emplacement des données PDI associées au contenu reçu sur la base du locali-sateur PDI identifiant un emplacement des données PDI dans un carrousel de distribution de fichiers basés sur un protocole de transport unidirectionnel, FLUTE, extrait d'un flux de transport transportant le contenu ;
récupérer les données PDI comprenant le questionnaire PDI-Q en utilisant l'URI extrait lorsque le type d'URI extrait indique que l'URI extrait est un localisateur PDI ;
générer des réponses PDI-A audit questionnaire PDI-Q récupéré ;
filtrer le contenu reçu sur la base desdites réponses PDI-A et desdites métadonnées (PDI-FC) ; et
une interface d'affichage pour délivrer en sortie le contenu filtré pour affichage.

9. Appareil de réception (20) selon la revendication 8, dans lequel le processeur (300) est configuré pour extraire l'URI et le type d'URI d'un canal de sous-titres codés associé au contenu reçu.

10. Appareil de réception (20) selon la revendication 9, comprenant en outre :
une unité d'extraction configurée pour extraire l'URI et le type d'URI de données textuelles de sous-titres non codés dans un bloc de service ayant un numéro de service situé dans la plage de 1 à 6, en particulier ayant un numéro de service de 6.

11. Appareil de réception (20) selon l'une quelconque des revendications 8 à 10, dans lequel le processeur (300) est configuré pour déterminer l'emplacement des données PDI associées au contenu reçu sur la base du localisateur PDI extrait d'une table de paramètres d'objets déclaratifs déclenchés, TPT, associée au contenu reçu.

12. Appareil de réception (20) selon l'une quelconque des revendications 8 à 11, dans lequel le récepteur (320) est configuré pour recevoir le contenu par l'intermédiaire d'au moins un élément parmi une diffusion par satellite, une transmission de télévision par câble, une diffusion de télévision terrestre et Internet.

13. Appareil de réception (20) selon l'une quelconque des revendications 8 à 11, dans lequel le processeur (300) est configuré pour récupérer les données PDI sur la base de l'URI extrait et d'une ou d'une combinaison des éléments suivants : un nom de fichier prédéter-miné, un chemin de répertoire prédéterminé, et un fichier d'emplacement PDI.

14. Système de fourniture d'informations, comprenant :
un appareil de fourniture d'informations (1100) comprenant :
une mémoire (1110) configurée pour stocker des données de profils, de démographie et d'intérêts, PDI, dont un questionnaire PDI-Q ;
des circuits configurés pour :
générer un identifiant uniforme de ressources, URI, et un type d'URI qui est associé à l'URI, moyennant quoi l'URI est un localisateur PDI qui identifie un emplacement des données PDI ;
générer un flux de diffusion, qui comprend un contenu à délivrer en sortie pour affichage et l'URI et le type d'URI ;
transmettre le flux de diffusion à un appareil de réception ;
une unité de communication (1120) configurée pour fournir les données PDI à l'appareil de réception (20) à un emplacement déterminé par l'appareil de réception sur la base de l'URI et du type d'URI, et
un appareil de réception tel que revendiqué dans la revendication 1.
